(19) Europäisches Patentamt / European Patent Office / Office européen des brevets

(11) **EP 4 764 964 A1**

(12) **DEMANDE DE BREVET EUROPEEN**

(43) Date de publication:
**24.06.2026 Bulletin 2026/26**

(21) Numéro de dépôt: **25224218.5**

(22) Date de dépôt: **17.12.2025**

(51) Classification Internationale des Brevets (IPC):
**G06N 5/01** *(2023.01)*    **H04L 9/00** *(2022.01)*
**G06F 21/62** *(2013.01)*

(52) Classification Coopérative des Brevets (CPC):
**G06F 21/6245; G06N 5/01; H04L 9/008**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **17.12.2024 FR 2414354**

(71) Demandeur: **Commissariat à l'Energie Atomique et aux Energies Alternatives**
**75015 Paris (FR)**

(72) Inventeurs:
• **BOUDGUIGA, Aymen**
  **91191 Gif-sur-Yvette Cedex (FR)**
• **BULTEL, Jean-Paul**
  **91191 Gif-sur-Yvette Cedex (FR)**
• **CHECRI, Marina**
  **91191 Gif-sur-Yvette Cedex (FR)**
• **CLET, Pierre-Emmanuel**
  **91191 Gif-sur-Yvette Cedex (FR)**
• **CHAKRABORTY, Olive**
  **91191 Gif-sur-Yvette Cedex (FR)**
• **SIRDEY, Renaud**
  **91191 Gif-sur-Yvette Cedex (FR)**

(74) Mandataire: **Lavoix**
**2, place d'Estienne d'Orves**
**75441 Paris Cedex 09 (FR)**

(54) **PROCÉDÉ ET SYSTÈME DE TRAITEMENT DE DONNÉES CHIFFRÉES COMPORTANT UNE ÉVALUATION D'UN VECTEUR DE DONNÉES CHIFFRÉES D'UN CLIENT PAR AU MOINS UN ARBRE DE DÉCISION FOURNI PAR UN SERVEUR**

(57) Ce procédé comprend, pour l'évaluation d'un vecteur de données chiffrées d'un client par au moins un arbre de décision (22) fourni par un serveur (6), dans une phase de comparaison : par un premier environnement d'exécution, mettant en œuvre un schéma de chiffrement homomorphe, calcul (52, 54) d'un vecteur d'évaluation, comportant des composantes chiffrées représentatives d'une différence entre une composante du vecteur de données chiffrées et une valeur de seuil de décision associée à un nœud correspondant dudit au moins un arbre de décision, et le fourniture du vecteur d'évaluation à un deuxième environnement d'exécution qui est un environnement d'exécution sécurisé, exécuté par ledit serveur mais contrôlé par ledit client,
et par le deuxième environnement d'exécution sécurisé:
-déchiffrement (56) dudit vecteur d'évaluation en appliquant une clé privée dudit client, détermination (58) du signe de chaque composante du vecteur d'évaluation déchiffré et fourniture d'un vecteur des signes chiffré au premier environnement d'exécution.

*FIGURE.4*

**EP 4 764 964 A1**

**Description**

La présente invention concerne un procédé et un système de traitement de données chiffrées comportant une évaluation d'un vecteur de données chiffrées d'un client par au moins un arbre de décision fourni par un serveur.

L'invention se situe dans le domaine du chiffrement des données numériques, et du traitement de données numériques chiffrées.

Le chiffrement de données numériques est critique pour de nombreuses applications, afin de protéger des données numériques confidentielles, qu'il s'agisse de données numériques médicales, industrielles, bancaires.

De nombreuses applications nécessitent la mise en œuvre de calculs sur des données numériques, et il est usuel de proposer d'effectuer des calculs lourds sur des serveurs de calculs, mis à la disposition de clients divers. En particulier, des calculs mettant en œuvre des méthodes d'intelligence artificielle, mises au point par apprentissage machine, sont proposés par des serveurs. Dans un tel contexte, il est critique d'assurer la protection et la confidentialité, à la fois des données numériques du client, et des paramètres spécifiques des méthodes d'intelligence artificielle mises en œuvre par les serveurs.

En effet, la mise au point de méthodes d'intelligence artificielle par apprentissage machine nécessite de faire de choix algorithmiques pour définir un modèle d'intelligence artificielle à appliquer, et un apprentissage de paramètres du modèle, qui sont en très grand nombre. La phase d'apprentissage utilise de nombreuses ressources calculatoires et des données d'apprentissage préalablement collectées, la collecte et le stockage de données d'apprentissage étant longs et coûteux également.

Ainsi, dans un tel cadre applicatif, chacun des intervenants, respectivement le client et le serveur, a besoin de protéger ses propres données numériques. La protection des données numériques est réalisée par chiffrement.

On connaît notamment des schémas de chiffrement/déchiffrement à clé publique et clé privée, ces clés étant distinctes, la clé privée étant secrète et personnelle, uniquement connue du propriétaire des données. Seul le détenteur de la clé privée peut déchiffrer les données numériques chiffrées avec la clé publique correspondante.

De plus, des systèmes de calcul confidentiel, utilisant le chiffrement homomorphe ont été mis au point. Un tel système de calcul confidentiel permet de mettre en œuvre des opérations d'addition/soustraction et de multiplication sur des données chiffrées, pour obtenir un résultat chiffré sans avoir à effectuer de déchiffrement. Le résultat de toute opération sur des données chiffrées (opération effectuée « en aveugle ») correspond au résultat de l'application de la même opération sans chiffrement (opération « en clair »). Cela permet avantageusement de déléguer des calculs à un serveur externe sans que le serveur externe déchiffre les données chiffrées, ce qui permet de déléguer des calculs tout en maintenant la confidentialité des données. Après avoir effectué les calculs dans le domaine chiffré, en utilisant le schéma de chiffrement homomorphe, le serveur transmet le résultat chiffré au client, qui déchiffre le résultat en utilisant sa clé privée.

Cependant, les calculs sur les données chiffrées dans un système de chiffrement homomorphe sont lourds, utilisent de nombreuses ressources calculatoires et nécessitent un temps long.

Un objet de l'invention est de proposer un traitement distant de données chiffrées qui soit plus efficace tout en assurant la confidentialité des données traitées.

L'invention s'applique plus particulièrement à l'évaluation confidentielle d'un vecteur de données chiffrées d'un client par au moins un arbre de décision fourni par un serveur. On entend ici par évaluation confidentielle une évaluation qui ne donne pas accès à des données déchiffrées (ou données en clair) du client.

Un objectif complémentaire de l'invention est de préserver également la confidentialité des opérations et données propres au serveur qui effectue les calculs.

A cet effet, l'invention a pour objet un procédé de traitement de données chiffrées comportant une évaluation d'un vecteur de données chiffrées d'un client par au moins un arbre de décision fourni par un serveur, le vecteur de données chiffrées du client étant de dimension $K$ inférieure ou égale au nombre de nœuds dudit au moins un arbre de décision, l'évaluation du vecteur de données chiffrées par au moins un arbre de décision comportant une phase de comparaison des composantes du vecteur de données chiffrées à des valeurs de seuils de décision associées aux nœuds dudit au moins un arbre de décision, et une phase de parcours de l'au moins un arbre de décision en fonction du résultat de la phase de comparaison, pour obtenir un résultat de décision chiffré. Ce procédé est mis en œuvre par ledit serveur et comporte, dans la phase de comparaison :

par un premier environnement d'exécution, mettant en œuvre un schéma de chiffrement homomorphe, un calcul d'un vecteur d'évaluation, comportant des composantes chiffrées représentatives chacune d'une différence entre une composante du vecteur de données chiffrées et une valeur de seuil de décision associée à un nœud correspondant dudit au moins un arbre de décision,
fourniture du vecteur d'évaluation à un deuxième environnement d'exécution qui est un environnement d'exécution sécurisé, exécuté par ledit serveur mais contrôlé par ledit client,
par le deuxième environnement d'exécution sécurisé:

2

- déchiffrement, en appliquant une clé privée dudit client, préalablement enregistrée dans l'environnement d'exécution sécurisé, dudit vecteur d'évaluation,
- détermination du signe de chaque composante du vecteur d'évaluation déchiffré et fourniture d'au moins un vecteur des signes chiffré résultant de ladite détermination du signe audit premier environnement d'exécution.

Avantageusement, le procédé proposé utilise à la fois un premier environnement d'exécution géré par le serveur et un deuxième environnement d'exécution sécurisé dans la phase de comparaison des composantes du vecteur de données chiffrées à des valeurs de seuils de décision associées aux nœuds de l'arbre de décision. Le deuxième environnement d'exécution sécurisé est géré par le client et comporte des informations du client, notamment la clé privée du client permettant le déchiffrement des données chiffrées. Le deuxième environnement d'exécution sécurisé est installé sur le serveur mais cloisonné, donc les informations et données traitées dans ce deuxième environnement d'exécution sécurisé ne sont pas accessibles au serveur. Avantageusement, le deuxième environnement d'exécution sécurisé est utilisé pour effectuer des comparaisons en clair, ce qui permet d'accélérer les calculs, tout en préservant la confidentialité des données traitées, car les données déchiffrées dans le deuxième environnement d'exécution sécurisé ne sont pas accessibles par le premier environnement d'exécution géré par le serveur.

Suivant d'autres aspects avantageux de l'invention, le procédé de traitement de données chiffrées comprend une ou plusieurs des caractéristiques suivantes, prises isolément ou suivant toutes les combinaisons techniquement possibles.

Le calcul d'un vecteur d'évaluation comporte un calcul d'un vecteur de différence chiffré par soustraction chiffrée entre le vecteur de données chiffré et un vecteur formé desdits seuils de décision.

Le calcul d'un vecteur d'évaluation comporte en outre un masquage multiplicatif du vecteur de différence chiffré par un vecteur de masquage.

Le masquage multiplicatif comporte une génération du vecteur de masquage par tirage pseudo-aléatoire de K valeurs non nulles et une multiplication dudit vecteur de différence chiffré et du vecteur de masquage, pour obtenir ledit vecteur d'évaluation.

Le procédé comporte, par le premier environnement d'exécution, suite à la réception d'au moins un vecteur des signes chiffré, une combinaison) du vecteur de masquage et de chaque composante dudit vecteur des signes chiffré, pour obtenir un vecteur de comparaison chiffré représentatif de la comparaison de chaque composante du vecteur de données chiffrées au seuil de décision correspondant.

La détermination du signe de chaque composante du vecteur d'évaluation déchiffré par le deuxième environnement d'exécution sécurisé comporte en outre une multiplication de chaque composante de signe par un facteur constant choisi, de préférence égal à 0,5.

Le procédé comporte en outre, par le premier environnement d'exécution, un ajustement additif consistant à ajouter ledit facteur constant à chaque composante dudit vecteur des signes chiffré.

La phase de parcours de l'au moins un arbre de décision est effectuée par le premier environnement d'exécution, et comporte un calcul d'un vecteur de résultat par niveau de l'arbre de décision en fonction dudit au moins un vecteur des signes chiffré.

Le procédé comporte en outre un calcul d'un vecteur de décision en fonction des vecteurs de résultat par niveau.

Le calcul d'un vecteur de décision comporte une multiplication chiffrée, des vecteurs de résultat par niveau.

Le calcul d'un vecteur de décision comporte une addition chiffrée des vecteurs de résultat par niveau, pour obtenir un vecteur résultat somme chiffré.

Le calcul d'un vecteur de décision comporte en outre une étape d'amorçage appliqué au vecteur résultat somme chiffré pour obtenir un vecteur de décision comportant un seul '1' indiquant un nœud terminal résultat et des '0' pour les autres nœuds terminaux de l'arbre de décision.

Le calcul d'un vecteur de décision comporte en outre une étape de soustraction d'une valeur prédéterminée, égale au nombre de niveaux de profondeur de l'arbre de décision, de chaque composante du vecteur résultat somme chiffré, et une étape de masquage multiplicatif du vecteur résultant de ladite étape de soustraction, permettant d'obtenir un vecteur de décision comportant un seul '0' indiquant un nœud terminal résultat et des valeurs aléatoires pour les autres nœuds terminaux de l'arbre de décision.

L'invention concerne également un programme d'ordinateur comportant des instructions logicielles qui, lorsqu'elles sont exécutées par un ordinateur, mettent en œuvre un procédé de traitement de données chiffrées tel que défini ci-dessus.

Selon un autre aspect, l'invention a pour objet un système de traitement de données chiffrées comportant un client et un serveur fournissant un moins un arbre de décision, le serveur étant configuré pour effectuer une évaluation d'un vecteur de données chiffrées d'un client par l'au moins un arbre de décision, le vecteur de données chiffrées du client étant de dimension K inférieure ou égale au nombre de nœuds dudit au moins un arbre de décision, l'évaluation du vecteur de données chiffrées par au moins un arbre de décision comportant une phase de comparaison des composantes du vecteur de données chiffrées à des valeurs de seuils de décision associées aux nœuds dudit au moins un arbre de décision, et une phase de parcours de l'au moins un arbre de décision en fonction du résultat de la phase de comparaison, pour obtenir un résultat de décision chiffré, le système comportant un premier environnement d'exécution et un deuxième environnement d'exécution sécurisé. Le système est tel que, dans la phase de comparaison :

le premier environnement d'exécution, est configuré pour mettre en œuvre un schéma de chiffrement homomorphe, un module de calcul d'un vecteur d'évaluation, comportant des composantes chiffrées représentatives chacune d'une différence entre une composante du vecteur de données chiffrées et une valeur de seuil de décision associée à un nœud correspondant dudit au moins un arbre de décision, et de fourniture du vecteur d'évaluation audit deuxième environnement d'exécution sécurisé, exécuté par ledit serveur mais contrôlé par ledit client, le deuxième environnement d'exécution sécurisé étant configuré pour mettre en œuvre :

- un module de déchiffrement, en appliquant une clé privée dudit client, préalablement enregistrée dans l'environnement d'exécution sécurisé, dudit vecteur d'évaluation,
- un module de détermination du signe de chaque composante du vecteur d'évaluation déchiffré et fourniture d'un vecteur des signes chiffré résultant de ladite détermination du signe audit premier environnement d'exécution.

L'invention apparaîtra plus clairement à la lecture de la description qui va suivre, donnée uniquement à titre d'exemple non limitatif, et faite en référence aux dessins dans lesquels :

[Fig. 1] la figure 1 est un système de traitement de données chiffrées comportant un client et un serveur, le serveur comportant un processeur de calcul, un premier environnement d'exécution géré par le serveur et un deuxième environnement d'exécution sécurisé géré par le client;
[Fig. 2] la figure 2 est un exemple d'arbre de décision binaire ;
[Fig. 3] la figure 3 représente l'ensemble des chemins de l'arbre de décision binaire de la figure 2;
[Fig. 4] la figure 4 est un synoptique des principales étapes d'un procédé de traitement de données chiffrées selon un premier mode de réalisation ;
[Fig. 5] la figure 5 est un synoptique de plusieurs modes de réalisation d'une étape de la phase de parcours;
[Fig. 6] la figure est un synoptique des principales étapes d'un procédé de traitement de données chiffrées selon un deuxième mode de réalisation.

L'invention s'applique dans toute application d'évaluation de données, présentées sous forme d'un vecteur de données chiffrées, par un arbre de décision fourni par un serveur.

Les arbres de décision sont des algorithmes de structure arborescente, dont des paramètres sont appris par apprentissage machine, et utilisés dans la prise de décision. Ils sont par exemple utilisés dans la prise de décision pour des applications d'analyse de données médicales, d'analyse de données de fonctionnement d'équipements industriels dans le cadre du diagnostic de fonctionnement et de la maintenance prédictive, ou de détection d'attaques de sécurité dans des systèmes informatiques.

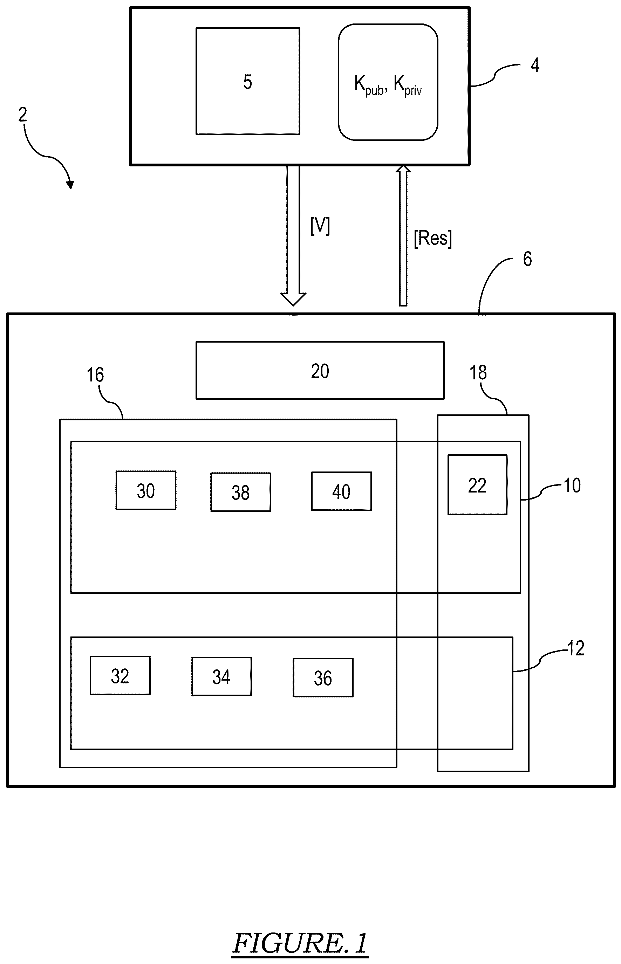

La figure 1 est un système 2 de traitement de données chiffrées comportant un système client 4 et un système serveur 6, appelés par la suite simplement « client 4 » et « serveur 6 ».

Le système 2 de traitement de données chiffrées est un système de calcul confidentiel, dans lequel des calculs d'évaluation de données chiffrés sont délégués au serveur 6 par le client 4.

Chacun des systèmes client 4 et serveur 6 comporte des ressources calculatoires électroniques.

Dans des modes de réalisation, chacun des systèmes client 4 et serveur 6 est formé d'un ou plusieurs dispositifs électroniques programmables (ou ordinateurs) interconnectés.

Le client 4 est configuré pour fournir des données chiffrées, selon un schéma de chiffrement homomorphe 5 (ou cryptosystème homomorphe), à clé publique $K_{pub}$ et clé privée $K_{priv}$.

Un schéma de chiffrement homomorphe ou cryptosystème homomorphe comporte une paire d'algorithmes de chiffrement Enc() et de déchiffrement Dec() associés, pour lesquels l'égalité suivante est satisfaite pour au moins une opération dans un anneau Z :

[MATH 1]

$$Dec\big(Enc(m_1) * Enc(m_2)\big) = Des\big(Enc(m_1 \circ m_2)\big) = m_1 \circ m_2$$

Les opérations notées « * » et « ∘ » étant des opérations de l'anneau Z, qui peuvent être soit identiques, soit distinctes.

Un cryptosystème est dit complètement homomorphe si la propriété [MATH 1] est vérifié pour toutes les opérations d'un anneau Z.

On connaît également des cryptosystèmes partiellement homomorphes.

Par exemple le cryptosystème complètement homomorphe TFHE (pour «Fully Homomorphic Encryption over the Torus ») est utilisé.

Par convention, dans la suite de la description, la notation entre crochets [X] indique que la donnée X est chiffrée, et la notation entre parenthèses (X) indique que la donnée X est non chiffrée (ou en clair).

Les données chiffrées sont fournies sous forme de vecteur de données chiffrées [V] de dimension K, K étant un entier supérieur à 1, au serveur 6 pour une évaluation par un arbre de décision binaire ou par une forêt aléatoire comportant une pluralité d'arbres de décision binaires.

Le nombre K de composantes du vecteur de données chiffrées à évaluer est inférieur ou égal au nombre de nœuds de l'arbre de décision binaire.

Dans la description ci-après, le nombre K de composantes du vecteur de données chiffrées à évaluer est égal au nombre de nœuds de l'arbre de décision binaire.

Les arbres de décision sont des algorithmes de structure arborescente, dont des paramètres sont appris par apprentissage machine dans une phase d'apprentissage préalable.

On considère dans la description le cas d'utilisation d'un arbre de décision binaire.

Les procédés décrits s'appliquent avec tout arbre de décision, car on connaît des méthodes de transformation d'une structure d'arbre quelconque en structure d'arbre binaire, par exemple la méthode de double chaîne ou « left child right sibling » en anglais.

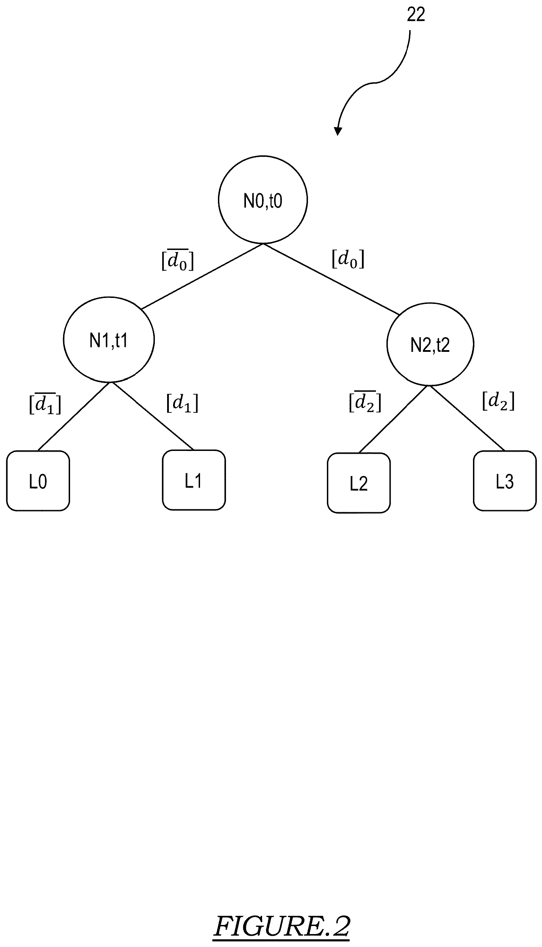

Un exemple de structure d'arbre de décision binaire 22 est illustré dans la figure 2. Dans l'exemple de la figure 2, l'arbre de décision binaire a D=2 niveaux de profondeur et comporte K=3 nœuds respectifs {N0, N1 et N2}, chaque nœud ayant une valeur de seuil de décision {t0, t1, t2} associée. Dans un structure arborescente binaire, chaque nœud d'un niveau p donné a deux nœuds enfants au niveau suivant (niveau p+1). Dans l'exemple simple illustré, le nœud N0 est le nœud racine de l'arbre, et il a deux nœuds enfants, respectivement N1 et N2.

L'arbre de décision binaire 22 comporte en outre M=4 nœuds terminaux également appelés « feuilles », notés respectivement L0, L1, L2, L3.

Dans l'exemple de la figure 2, chacun des nœuds N1 et N2 a deux nœuds enfants, respectivement L0 et L1 pour le nœud N1 et L2 et L3 pour le nœud N2.

Entre niveaux successifs, les nœuds sont liés par des branches.

Les nœuds terminaux n'ont pas de nœuds enfants. Le résultat de l'évaluation sur un arbre de décision binaire est fourni par les nœuds terminaux.

Un parcours de l'arbre de décision pour l'évaluation d'un vecteur de données $X = (X_0, X_1, X_2)$ comporte la comparaison des valeurs respectives des composantes $X_i$ aux valeurs de seuil de décision $t_i$ correspondantes, chaque comparaison fournissant un résultat de comparaison $[d_i]$ associé à une première branche descendant du nœud Ni (dans l'exemple, la branche de droite). Le résultat complémentaire de $[d_i]$, noté $[\overline{d_i}] = 1 - [d_i]$, est associé à la deuxième branche du nœud Ni (dans l'exemple, la branche de gauche).

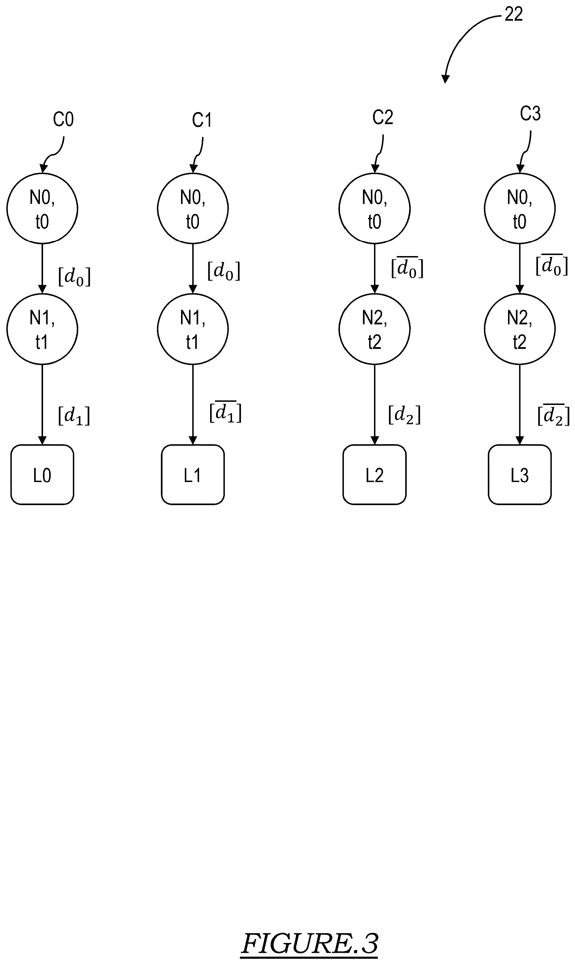

Dans la figure 3, l'arbre de décision 22 de la figure 2 est représenté sous forme dépliée, dans laquelle tous les chemins de parcours distincts de l'arbre sont représentés, notés respectivement C0, C1, C2, C3, chaque chemin correspondant à passage du nœud racine à un nœud terminal par des branches ayant chacune un résultat de comparaison associé. Un chemin est caractérisé par les résultats de comparaison successifs des branches formant le chemin.

Un parcours exhaustif de l'arbre de décision comporte l'évaluation des M chemins possibles, comme représenté dans la figure 3.

Bien entendu l'exemple des figures 2 et 3 est un exemple simpliste, des arbres binaires comprenant un nombre bien plus grand de nœuds étant utilisé dans des applications pratiques diverses.

Le client 4 applique un schéma de chiffrement homomorphe pour obtenir un vecteur de données chiffrées [V] qui comporte K composantes chiffrées.

Parmi les schémas de chiffrement homomorphe, on connaît des schémas mettant en œuvre des calculs sur un chiffrement « composante par composante » du vecteur de données, soit des calculs sur un chiffrement groupé, en utilisant la technique « batching » en chiffrement homomorphe. Le « batching » en chiffrement homomorphe, bien connu de l'homme du métier et décrit par exemple dans l'article « Fully Homomorphic SIMD Operations » de N. P. Smart et F. Vercauteren, accessible à https://eprint.iacr.org/2011/133.pdf., permet de réaliser efficacement des opérations sur les vecteurs chiffrés au lieu d'effectuer des opérations « composante par composante ».

Les procédés de l'invention décrits ci-après s'appliquent avec tout type de schéma de chiffrement homomorphe.

Il est à noter que lorsque les calculs sont effectués dans le cadre d'un schéma de chiffrement homomorphe, « en aveugle », l'évaluation d'un arbre de décision nécessite le calcul exhaustif de tous les chemins de l'arbre de décision.

Dans le cas de l'utilisation d'un chiffrement composante par composante, le vecteur [V] de données chiffrées s'écrit :

[MATH 2]

$$[V] = \{[v_0], \dots, [v_{K-1}]\}$$

Dans le cas d'un chiffrement groupé avec la technique de « batching » de toutes les composantes du vecteur, le vecteur de données chiffrées s'écrit :

[MATH 3]

$$[V] = [v_0, \dots, v_{K-1}]$$

Le serveur 6 comporte un premier environnement d'exécution 10 et un deuxième environnement d'exécution sécurisé 12.

Le premier environnement d'exécution 10 est contrôlé par le serveur 6.

Le deuxième environnement d'exécution 12 est un environnement d'exécution TEE (pour « Trusted Execution Environment »), cloisonné et sécurisé. Ce deuxième environnement d'exécution est matériellement exécuté par le serveur 6, mais il est configuré/contrôlé par le client : il contient des informations secrètes du client 4, qui ne sont pas accessibles par d'autres entités du serveur 6, en particulier par le premier environnement d'exécution 10. La mise en œuvre matérielle et logicielle d'un environnement d'exécution TEE dans un système de calcul est connue.

Par exemple, le deuxième environnement d'exécution sécurisé 12 est mis en œuvre par des enclaves sécurisées, par exemple des enclaves SGX d'Intel®.

Grâce à la séparation des deux environnements d'exécution, des applications différentes peuvent être exécutées par le deuxième environnement d'exécution 12, de manière isolée et sécurisée par rapport au premier environnement d'exécution 10, qui est l'environnement d'exécution « standard » mis en œuvre par le serveur.

L'utilisation d'un deuxième environnement d'exécution sécurisé 12 (ou TEE 12) permet d'assurer la confidentialité des données traitées dans le TEE 12, y compris lorsque le serveur 6 adopte un comportement malicieux.

Selon des modes de réalisation distincts, le premier environnement d'exécution 10 et le deuxième environnement d'exécution 12 sont exécutés soit sur un même processeur, soit sur des processeurs distincts.

Ainsi, le premier environnement d'exécution et le deuxième environnement d'exécution sont isolés, matériellement et/ou au travers de schémas de séparation au niveau du système d'exploitation.

Dans le mode de réalisation décrit en référence à la figure 1, le serveur 6 comporte une unité de calcul 16 composée d'un ou plusieurs processeurs, une unité de mémoire électronique 18, une unité de communication 20, configurée pour communiquer avec le client 4.

Le premier environnement d'exécution 10 et le deuxième environnement d'exécution sécurisé 12 (ou TEE 12) sont configurés pour coopérer pour la mise en œuvre du procédé de traitement de données chiffrées en provenance du client 4, utilisant le schéma de cryptographie homomorphe 5.

Afin de préserver la confidentialité des données du client, le premier environnement d'exécution 10 traite les données du client uniquement sous forme chiffrée, et effectue des calculs « en aveugle » sur les données chiffrées en utilisant le schéma de cryptographie homomorphe 5. Avantageusement, le deuxième environnement d'exécution sécurisé 12 qui est contrôlé par le client met en œuvre la clé privée $K_{priv}$ du client 4 pour effectuer un déchiffrement de données chiffrées du client, ce qui permet ensuite d'effectuer des calculs en clair.

Le traitement de données chiffrées met en œuvre une évaluation un ou plusieurs arbres de décision 22, préalablement entraînés par apprentissage machine pour une tâche spécifique. Le ou les arbres de décision 22 font partie des données du serveur 6, maintenues dans le premier environnement d'exécution 10.

Dans la suite de la description, le cas de l'évaluation sur un arbre de décision 22 sera décrit, étant entendu que les modes de réalisation décrits ci-après s'appliquent de manière analogue à l'évaluation sur une pluralité d'arbres de décision.

De préférence, selon des modes de réalisation décrits ci-après, le ou les arbres de décision 22 sont protégés de sorte que, lorsque le TEE 12 adopte un comportement « honnête mais curieux », le TEE 12 ne puisse pas obtenir d'information relative aux arbres de décision 22.

Le procédé de traitement de données chiffrées comporte une phase de comparaison des composantes du vecteur de données chiffrées à des seuils de décision respectifs, chaque seuil de décision étant associé à un nœud distinct de l'arbre de décision. La phase de comparaison est suivie d'une phase de parcours de l'arbre de décision 22 pour fournir un résultat d'évaluation [Res], ce résultat étant envoyé au client sous forme chiffrée, puis déchiffré par le client.

Le premier environnement d'exécution 10 est configuré pour mettre en œuvre un module 30 de calcul d'un vecteur d'évaluation comportant des composantes chiffrées représentatives de la différence entre composantes du vecteur de données chiffrées et valeurs de seuil de décision, chaque valeur de seuil étant associée à un nœud correspondant.

Le premier environnement d'exécution 10 est configuré pour fournir le vecteur d'évaluation au TEE 12.

Le TEE 12 met en œuvre un module de déchiffrement 32 et un module 34 de détermination du signe de chaque composante du vecteur d'évaluation, et un module 36 de fourniture d'un vecteur des signes chiffré. Le vecteur des signes chiffré est transmis par le TEE 12 au premier environnement d'exécution 10.

Le premier environnement d'exécution 10 met en œuvre un module 38 de calcul d'un vecteur de comparaison chiffré, et un module 40 de calcul d'un résultat de la traversé de l'arbre de décision 22 pour le vecteur de données chiffrées [V] du client 4.

Dans un mode de réalisation, les modules 30, 32, 34, 36, 38, 40 sont réalisés sous forme d'instructions logicielles formant un programme d'ordinateur, qui, lorsqu'il est exécuté par un dispositif électronique programmable, met en œuvre un procédé de traitement de données chiffrées tel que décrit.

En variante non représentée, les modules 30, 32, 34, 36, 40 sont réalisés chacun sous forme de composants logiques programmables, tels que des FPGA (de l'anglais *Field Programmable Gate Array),* des microprocesseurs, des composants GPGPU (de l'anglais *General-purpose processing on graphies processing*), ou encore de circuits intégrés dédiés, tels que des ASIC (de l'anglais *Application Specific Integrated Circuit).*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

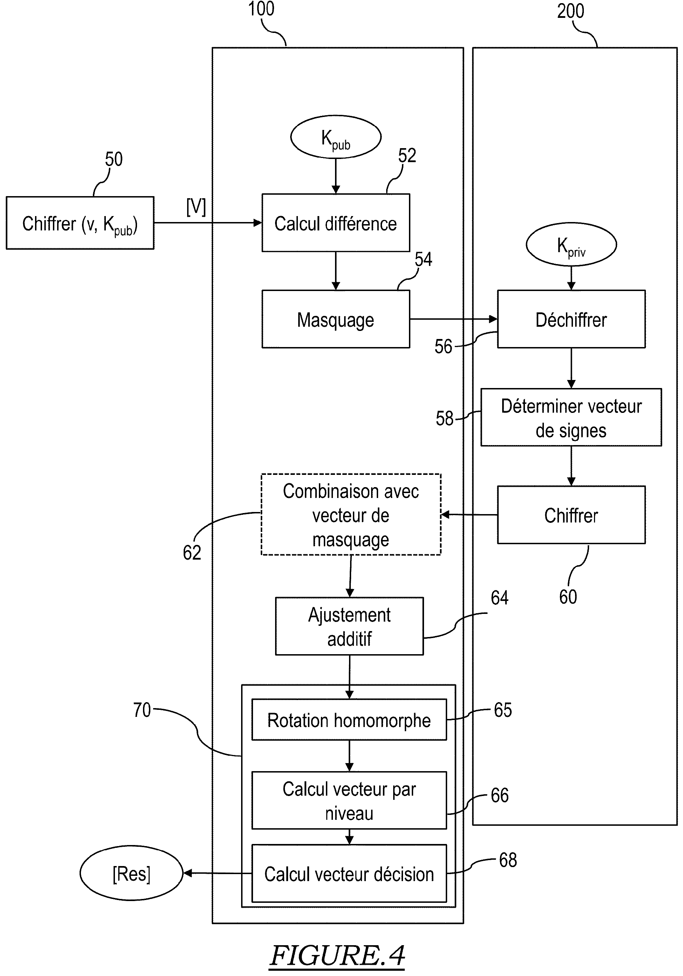

La figure 4 est un logigramme des principales étapes d'un procédé de traitement de données chiffrées selon un mode de réalisation.

Le procédé comprend des étapes 100 effectuées par le premier environnement d'exécution 10 du serveur et des étapes 200 effectuées par le deuxième environnement d'exécution sécurisé 12 du serveur.

Le client 4 effectue un chiffrement 50 de données à traiter, en utilisant la clé publique $K_{pub}$ du client, et fournit un vecteur [V] de données chiffrées au serveur 6.

Dans ce premier mode de réalisation, le schéma de chiffrement homomorphe utilisé supporte le groupement ou « batching ».

Par exemple le schéma de chiffrement homomorphe est un cryptosystème BFV, (pour « Brakerski-Fan-Vercauteren »), BGV (pour « Brakerski-Gentry-Vaikuntanathan) ou CKKS (« Cheon-Kim-Kim-Song »), ces divers types de cryptosystèmes étant connus dans le domaine du chiffrement homomorphe.

Comme déjà expliqué, toutes les opérations calculatoires mises en œuvre par le premier environnement d'exécution 10 du serveur 6 sont effectuées sur des données chiffrées, sans déchiffrement, en utilisant le schéma de chiffrement homomorphe choisi.

Le premier environnement d'exécution 10 reçoit un vecteur [V] de données chiffrées à évaluer par un arbre d'évaluation 22, et met en œuvre une étape 52 de calcul d'un vecteur d'évaluation sur l'arbre de décision binaire.

Dans un mode de réalisation, l'arbre de décision binaire comporte K nœuds, K étant le nombre de composantes du vecteur [V] de données chiffrées.

Chaque nœud Ni de l'arbre de décision à appliquer a une valeur de seuil de décision ti associée. Les valeurs de seuil de décision sont les composantes d'un vecteur T de seuils de décision : $T = (t_0, ..., t_{K-1})$.

Le vecteur de seuils de décision est en clair, les valeurs des seuils de décision étant des données du serveur 6.

Lors de l'étape 52, le premier environnement d'exécution 10 met en œuvre une soustraction en « chiffré/clair », permettant d'obtenir un vecteur de différence chiffré :

[MATH 4]

$$[V_{sub}] = [v_0, ..., v_{K-1}] - (t_0, ..., t_{K-1}) = [v_0 - t_0, ..., v_{K-1} - t_{K-1}]$$

Le vecteur de différence chiffré $[V_{sub}]$ obtenu est un vecteur d'évaluation des différences, nœud par nœud, entre les composantes chiffrées du vecteur de données chiffrées et les valeurs de seuils de décision de l'arbre de décision.

Ainsi, si la composante $v_k$ a une valeur supérieure ou égale à la valeur de seuil de décision $t_k$, la différence $v_k - t_k$, composante d'indice k du vecteur de différence, est un nombre réel positif ou nul ; si la composante $v_k$ a une valeur strictement inférieure à la valeur de seuil de décision $t_k$, la différence $v_k - t_k$, composante d'indice k du vecteur de différence, est un nombre réel négatif.

Optionnellement, le premier environnement d'exécution 10 met en œuvre une étape 54 de masquage multiplicatif du vecteur de différence chiffré, en multipliant le vecteur de différence chiffré obtenu à l'étape 52 par un vecteur de masquage. Cela permet de préserver la confidentialité des valeurs de seuil de décision.

En alternative, dans des applications dans lesquelles le client et l'environnement d'exécution sécurisé 12 sont considérés fiables et honnêtes, l'étape 54 de masquage multiplicatif du vecteur de différence chiffré peut être omise.

Lors de l'étape 54 de masquage, un vecteur de masquage R de dimension K est généré, par exemple par tirage pseudo-aléatoire. Le vecteur de masquage, ou un vecteur comprenant les signes du vecteur de masquage, et mémorisé dans une unité de mémoire accessible par le premier environnement d'exécution. Le vecteur de masquage R a des composantes pseudo-aléatoires réelles non nulles $r_i$, de signes aléatoirement positif ou négatif :

[MATH 5]

$$R = (r_0, \ldots, r_{K-1})$$

Le vecteur de différence chiffré est multiplié, composante par composante, par le vecteur de masquage R, et un vecteur de différence masqué est obtenu :

[MATH 6]

$$[V_{sub\_m}] = [r_0 \times (v_0 - t_0), \ldots, r_i \times (r_i - t_i), \ldots, r_{K-1} \times (v_{K-1} - t_{K-1})]$$

Le vecteur de différence masqué obtenu à l'issue de l'étape de masquage 54 est un vecteur d'évaluation des différences, comportant des composantes représentatives de la différence entre les composantes chiffrées du vecteur de données chiffrées et les valeurs de seuils de décision.

Le vecteur d'évaluation obtenu à l'issue de l'étape 54 (ou alternativement de l'étape 52), est transmis au deuxième environnement d'exécution sécurisé 12.

Le deuxième environnement d'exécution 12 sécurisé met en œuvre un déchiffrement 56 utilisant la clé privée $K_{priv}$ du client et obtient un vecteur d'évaluation $V_e$ en clair :

[MATH 7]

$$V_e = \left(V_{e,0}, \ldots, V_{e,K-1}\right)$$

Dans le cas où l'étape de masquage 54 a été mise en œuvre, le vecteur d'évaluation ne permet pas d'inférer d'information relative aux valeurs de seuil de décision de l'arbre de décision.

Le deuxième environnement d'exécution 12 détermine 58 le signe de chaque composante du vecteur d'évaluation $V_e$ en clair. Avantageusement, cette opération de détermination est effectuée efficacement en clair, alors qu'une détermination de signe dans un cryptosystème homomorphe est complexe.

Avantageusement, à l'étape 58 de détermination du signe, un vecteur de signes dont chaque composante est multipliée par un facteur constant choisi, de préférence égal à 0,5, est calculé :

[MATH 8]

$$V_{sign} = \left(\frac{1}{2} \times sgn(V_{e,0}), \ldots, \frac{1}{2} \times sgn(V_{e,K-1})\right)$$

Où *sgn(x)* est la fonction signe :

[MATH 9]

$$sgn(x) = 1 \ si \ x \geq 0$$

$$sgn(x) = -1 \ si \ x < 0$$

Le vecteur de signes $V_{sign}$ obtenu comme résultat de l'étape de détermination 58 est ensuite chiffré, selon le schéma de chiffrement homomorphe, avec la clé publique $K_{pub}$ du client 4 à l'étape de chiffrement 60, puis le vecteur des signes chiffré $[V_{sign}]$ est transmis au premier environnement d'exécution 10.

Lorsque l'étape de masquage 54 a été mise en œuvre, le premier environnement d'exécution 10 met en œuvre une étape 62 de combinaison du vecteur des signes chiffré $[V_{sign}]$ reçu du deuxième environnement d'exécution sécurisé avec le vecteur de masquage R.

La combinaison 62 consiste en une multiplication «chiffré / clair » du vecteur des signes chiffré reçu avec les signes de la composante correspondante du vecteur de masquage. Les signes respectifs du vecteur de masquage R sont connus par le premier environnement d'exécution, donc ils sont utilisés en clair.

Ainsi, la modification aléatoire des signes des composantes du vecteur de différence, effectuée à l'étape de masquage 52, est annulée.

A l'issue de l'étape de combinaison 62 est obtenu un vecteur de comparaison chiffré :

[MATH 10]

$$[V_{comp}] = [V_{sign,0} \times sign(r_0), ..., V_{sign,K-1} \times sign(r_{K-1})]$$

Dans une variante optionnelle, lorsque l'étape 54 de masquage a été omise, le vecteur de comparaison chiffré est le vecteur des signes chiffré reçu.

Le premier environnement d'exécution 10 met en œuvre ensuite une étape 64 d'ajustement additif en clair/-chiffré, consistant à ajouter le facteur constant appliqué à l'étape 58 par le deuxième environnement d'exécution.

Dans le mode de réalisation décrit, le facteur constant appliqué est égal à 0,5 :

[MATH 11]

$$[V_{comp-final}] = \left[V_{sign,0} \times sign(r_0) + \frac{1}{2}, ..., V_{sign,K-1} \times sign(r_{K-1}) + \frac{1}{2}\right]$$

L'opération d'ajustement additif effectuée à l'étape 64 permet d'obtenir un vecteur de comparaison chiffré (qui est le résultat final de la phase de comparaison), dont chaque composante d'indice i donné représente le résultat de la comparaison de la composante d'indice i du vecteur [V] de données chiffrées à la valeur de seuil de décision ti du nœud Ni :

[MATH 12]

$$[V_{comp-final}] = [(v_0 \geq t_0?), ..., (v_{K-1} \geq t_{K-1}?)]$$

Le résultat de la comparaison pour chaque composante est soit un 0 chiffré, soit un 1 chiffré :

[MATH 13]

$$V_{comp-final,k} = [d_k] = [0] \; si \; v_k < t_k \; \text{et}$$

$$V_{comp-final,k} = [d_k] = [1] \; si \; v_k \geq t_k$$

Le vecteur de comparaison chiffré comporte K composantes.

Les étapes 52 à 64 font partie de la phase de comparaison des composantes du vecteur de données chiffrées à des valeurs de seuils de décision associées aux nœuds de l'arbre de décision.

Le procédé comporte ensuite une phase 70 de parcours de l'arbre de décision en fonction du résultat de la phase de comparaison.

Comme la phase de comparaison, la phase de parcours 70 est confidentielle, les étapes mises en œuvre par le premier environnement d'exécution 10 sont effectuées sur des données chiffrées en utilisant le schéma de chiffrement homomorphe.

Dans le premier mode de réalisation, les calculs sont effectués avec la technique de « batching ». Les étapes de la phase de parcours sont toutes mises en œuvre par le premier environnement d'exécution.

La phase de parcours 70 comporte une étape 65 de mise en œuvre de rotations homomorphes pour obtenir, à partir du vecteur de comparaison chiffré des vecteurs décalés, chaque vecteur décalé d'un décalage circulaire de j positions comportant K composantes re-arrangées : $[d_j, ..., d_{K-1}, d_0, ..., d_{j-1}]$.

La mise en œuvre de rotations homomorphes dans un cryptosystème FHE est bien connue de l'homme du métier.

La phase de parcours 70 comporte en outre une étape 66 de calcul d'un vecteur de résultat par niveau de l'arbre de décision à partir des vecteurs décalés calculés par rotation homomorphe, chaque vecteur de résultat par niveau ayant la taille M, M étant le nombre de nœuds terminaux.

En se référant à l'exemple de la figure 3, un vecteur de résultat de taille M=4 est associé à chaque niveau de l'arbre de décision :

[MATH 14]

$$[Vr_0] = \left[d_0, d_0, \overline{d_0}, \overline{d_0}\right]$$ est le vecteur de résultat de premier niveau,

$$[Vr_1] = \left[d_1, \overline{d_1}, d_2, \overline{d_2}\right]$$ est le vecteur de résultat de deuxième niveau

La structure des vecteurs de résultat par niveau est généralisable à un nombre de niveaux quelconque.

A l'étape 66, les vecteurs de résultat par niveau de taille M sont calculés à partir des valeurs chiffrées des résultats de la comparaison en chaque nœud, obtenues à l'étape précédente 65.

La phase de parcours comprend ensuite une étape 68 de calcul du vecteur de décision.

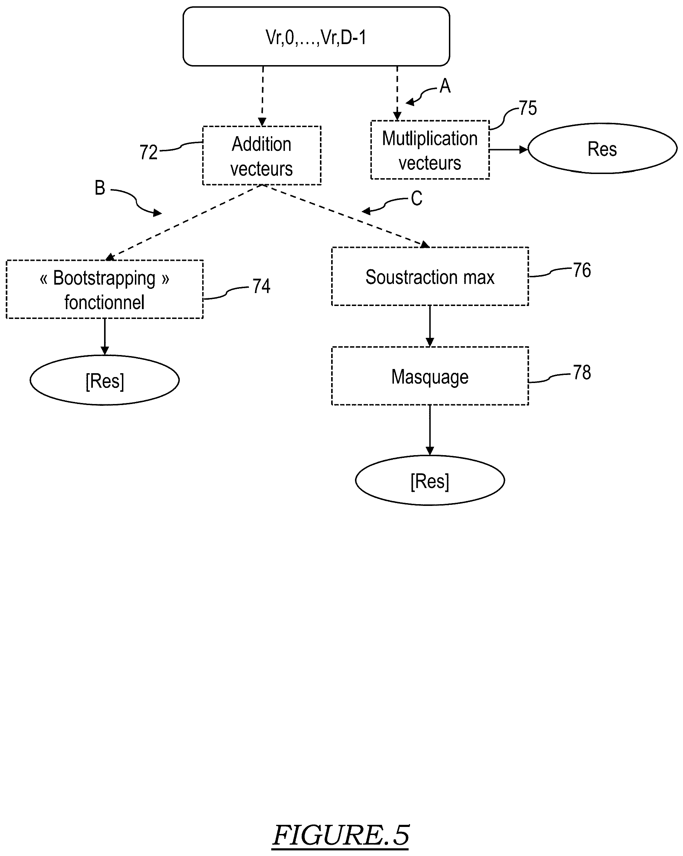

Plusieurs modes de réalisation de l'étape 68 de calcul du vecteur de décision sont décrits ci-après en référence à la figure 5. Dans cette figure, les traits pointillés indiquent des alternatives.

Dans le premier mode de réalisation (branche A de la figure 5) l'étape 68 de calcul est effectuée par une multiplication homomorphe 75 des vecteurs de résultat par niveau calculés à l'étape 66.

Le résultat recherché correspond au chemin de parcours dans l'arbre de décision dans lequel toutes les comparaisons sont positives, ou en d'autres termes, les valeurs représentatives de la comparaison de la composante du vecteur [V] de données chiffrées à la valeur de seuil de décision correspondante sont toutes différentes de [0].

La multiplication, composante à composante, des vecteurs de résultat par niveau calculés à l'étape 66 permet d'obtenir un vecteur de décision dont une seule composante est non nulle, un tel résultat étant également connu sous le nom de « 1-hot encoding » en anglais. L'indice de la composante non-nulle permet d'identifier la feuille correspondante dans l'arbre de décision, et en déduire le résultat [Res] de l'évaluation.

Par exemple, en se référant à l'arbre de décision représenté dans les figures 2 et 3, si pour un vecteur de données chiffrées $[V]=[V_1,V_2,V_3]$, les résultats de comparaison obtenus sont : $d_0 = 0$, $d_1 = 1$, $d_2 = 1$, les vecteurs de résultat par niveau sont respectivement, en appliquant les formules [MATH 14]:

[MATH 15]

$$[Vr, 0] = [0,0,1,1]$$

$$[Vr, 1] = [1,0,1,0]$$

La multiplication de ces vecteurs donne le résultat suivant :[0,0,1,0], qui est le vecteur de décision dans ce mode de réalisation. Seule la composante d'indice 2 est égale à 1, les autres composantes étant égales à 0.

Le résultat indique le chemin C2 et le nœud terminal L2.

Le résultat chiffré est transmis au client 4, qui le déchiffre pour obtenir la décision de l'évaluation du vecteur [V] de données chiffrées par l'arbre de décision implémenté par le serveur 6.

Dans un deuxième mode de réalisation (branche B de la figure 5) et un troisième mode de réalisation (branche C de la figure 5) l'étape de calcul du vecteur de décision comprend une addition homomorphe 72 des vecteurs de résultat par niveau.

Un vecteur résultat somme est obtenu :

[MATH 16]

$$[Vr_{sum}] = \sum_{i=0}^{D-1} [Vr, i]$$

Lorsque chaque résultat de comparaison comporte respectivement la valeur 0 ou la valeur 1, le vecteur résultat somme a une composante de valeur maximale, égale au nombre D de niveaux de profondeur.

Par exemple, lorsque les vecteurs de résultat par niveau sont ceux de la formule [MATH 15], le vecteur résultat somme obtenu est :

[MATH 17]

$$[Vr_{sum}] = [1,0,2,1]$$

Dans le deuxième mode de réalisation, le calcul comporte en outre une étape 74 d'amorçage ou « bootstrapping » fonctionnel, technique bien connue de l'homme du métier dans le domaine du chiffrement homomorphe, qui permet de convertir un contenu chiffré en un contenu chiffré dont le niveau de bruit a été diminué. L'étape 74 a pour but de remplacer la composante de valeur maximale du vecteur résultat somme par la valeur [1], et toutes les autres valeurs des composantes du vecteur résultat somme par des [0], de sorte à ne pas révéler des informations complémentaires sur le parcours de l'arbre de décision.

Le vecteur de décision est obtenu à l'issue de l'étape 74.

Dans le troisième mode de réalisation (branche C de la figure 5), l'étape d'addition homomorphe 72 est suivie d'une étape 76 de soustraction de la valeur D égale au nombre de niveaux de profondeur de chacune des composantes chiffrées du vecteur résultat somme.

Par exemple, lorsque le vecteur résultat somme est celui de la formule [MATH 17], le calcul effectué à l'étape de soustraction 76 est :

[MATH 18]

$$[Res] = [Vr_{sum}] - (2,2,2,2) = [-1, -2, 0, -1]$$

Le vecteur résultant de l'étape 76 contiendra une composante égale à [0], indiquant le résultat, les autres composantes ayant des négatives.

Ensuite, un masquage 78 analogue au masquage multiplicatif par un vecteur R' à valeurs aléatoires précédemment décrite en référence à l'étape de masquage 54.

Lors du masquage 78 est généré le vecteur R', à composantes de valeurs pseudo-aléatoires de valeurs nonnulles et de signes aléatoirement positif ou négatif.

Dans des modes de réalisation, le vecteur R' est distinct du vecteur de masquage R utilisé pour le masquage multiplicatif à l'étape de masquage 54.

Le masquage multiplicatif comporte la multiplication en « chiffré/clair des composantes du vecteur résultant de l'étape 76 [Vres] avec les composantes du vecteur R, pour former le vecteur de décision dans ce mode de réalisation. Le masquage multiplicatif conserve une composante d'indice k égale à [0], indiquant l'indice du résultat.

Le vecteur de décision chiffré [Res], indiquant le résultat de la décision, est transmis au client.

Dans la description ci-dessus, la phase de comparaison du procédé de traitement de données chiffrés est effectuée par coopération entre le premier environnement d'exécution et le deuxième environnement d'exécution, et la phase de parcours de l'arbre de décision est effectuée par le premier environnement d'exécution.

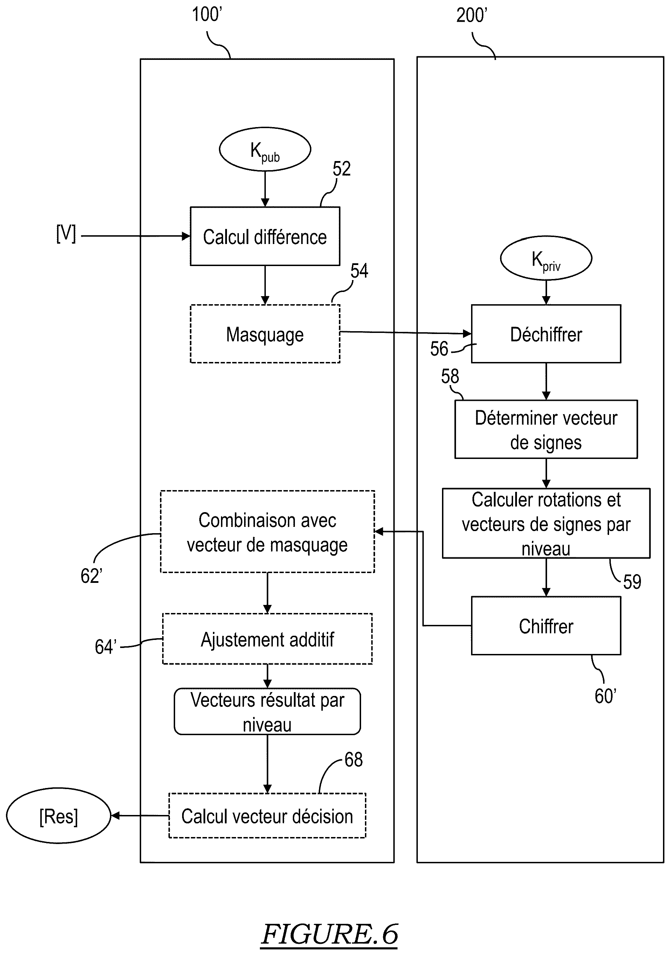

Selon une variante décrite en référence à la figure 6, la phase de parcours de l'arbre de décision est également effectuée par coopération entre le premier environnement d'exécution et le deuxième environnement d'exécution. Les étapes qui sont exécutées de la manière décrite ci-dessus, selon toutes les alternatives, portent le même numéro de référence et ne sont pas redécrites ci-dessous.

Dans le mode de réalisation de la figure 6, le deuxième environnement d'exécution sécurisé met en œuvre en outre une étape 59 de calcul des rotations, en clair, du vecteur de signes $V_{sign}$ explicité dans [MATH 8], permettant d'obtenir des vecteurs de signes par niveau.

En effet, le vecteur de signes comporte K composantes, égales respectivement à 1/2 ou -1/2, représentatives des signes des composantes du vecteur d'évaluation reçu, et plus précisément correspondant aux signes des composantes masquées du vecteur d'évaluation reçu.

En fonction des rangs des composantes dans le vecteur de signes, et du nombre de niveaux de l'arbre de décision, les vecteurs de signes par niveau sont calculés.

A titre d'exemple, dans le cas où D=2, les vecteurs des signes par niveau obtenus sont respectivement :

[MATH 19]

$$V_{s\_niv0} = (V_{sign,0}, V_{sign,0}, 1 - V_{sign,0}, 1 - V_{sign,0})$$

$$V_{s\_niv1} = (V_{sign,1}, 1 - V_{sign,1}, V_{sign,2}, 1 - V_{sign,2})$$

Chacun des vecteurs des signes par niveau est chiffré à l'étape de chiffrement 60' et transmis sous forme chiffrée au premier environnement d'exécution.

Le procédé comprend alors une combinaison 62' de chaque vecteur de signe par niveau chiffré reçu avec le signe des composantes du vecteur de masquage R, et une étape 64' d'ajustement additif de chaque vecteur de signe par niveau après masquage.

Les étapes de combinaison 62' et d'ajustement additif 64' sont analogues au étapes de combinaison 62 et d'ajustement additif 64, mais adaptées aux vecteurs des signes par niveau.

A l'issue de l'étape d'ajustement par niveau, les vecteurs résultat par niveau, chiffrés, analogues aux vecteurs résultat par niveau obtenus à l'issues de l'étape 66 du premier mode de réalisation, sont obtenus à l'issue de l'étape 64'.

Le procédé comporte ensuite, dans ce deuxième mode de réalisation, l'étape 68 de calcul d'un vecteur décision, effectuée de manière analogue, selon toutes ses variantes, au premier mode de réalisation.

L'invention a été décrite ci-dessus plus spécifiquement pour un schéma de chiffrement homomorphe supportant les calculs groupés (« batching »).

En variante, à la portée de l'homme du métier, les procédés décrits avec un schéma de chiffrement homomorphe dans lequel les calculs sont effectué composante par composante. Cependant, les calculs nécessitent plus de ressources calculatoires dans cette variante.

## Revendications

1. Procédé de traitement de données chiffrées comportant une évaluation d'un vecteur de données chiffrées d'un client par au moins un arbre de décision (22) fourni par un serveur (6), le vecteur de données chiffrées du client étant de dimension K inférieure ou égale au nombre de nœuds dudit au moins un arbre de décision, l'évaluation du vecteur de données chiffrées par au moins un arbre de décision comportant une phase de comparaison des composantes du vecteur de données chiffrées à des valeurs de seuils de décision (t0,t1,t2) associées aux nœuds (N0, N1, N2) dudit au moins un arbre de décision, et une phase de parcours de l'au moins un arbre de décision (22) en fonction du résultat de la phase de comparaison, pour obtenir un résultat de décision chiffré, le procédé étant **caractérisé en ce qu'**il est mis en œuvre par ledit serveur (6) et comporte, dans la phase de comparaison :

   par un premier environnement d'exécution (10), mettant en œuvre un schéma de chiffrement homomorphe, un calcul (52, 54) d'un vecteur d'évaluation, comportant des composantes chiffrées représentatives chacune d'une différence entre une composante du vecteur de données chiffrées et une valeur de seuil de décision associée à un nœud correspondant dudit au moins un arbre de décision,
   fourniture du vecteur d'évaluation à un deuxième environnement d'exécution (12) qui est un environnement d'exécution sécurisé, exécuté par ledit serveur mais contrôlé par ledit client,
   par le deuxième environnement d'exécution sécurisé (12):

      - déchiffrement (56), en appliquant une clé privée dudit client, préalablement enregistrée dans l'environnement d'exécution sécurisé (12), dudit vecteur d'évaluation,
      - détermination (58) du signe de chaque composante du vecteur d'évaluation déchiffré et fourniture d'au moins un vecteur des signes chiffré résultant de ladite détermination du signe audit premier environnement d'exécution (10).

2. Procédé selon la revendication 1, dans lequel le calcul d'un vecteur d'évaluation comporte un calcul d'un vecteur de différence chiffré par soustraction chiffrée entre le vecteur de données chiffré et un vecteur formé desdits seuils de décision.

3. Procédé selon la revendication 2, dans lequel le calcul (52, 54) d'un vecteur d'évaluation comporte en outre un masquage multiplicatif (54) du vecteur de différence chiffré par un vecteur de masquage.

4. Procédé selon la revendication 3, dans lequel ledit masquage multiplicatif (54) comporte une génération du vecteur de masquage par tirage pseudo-aléatoire de K valeurs non nulles et une multiplication dudit vecteur de différence chiffré et du vecteur de masquage, pour obtenir ledit vecteur d'évaluation.

5. Procédé selon la revendication 3 ou 4, comportant, par le premier environnement d'exécution (10), suite à la réception d'au moins un vecteur des signes chiffré, une combinaison (62, 62') du vecteur de masquage et de chaque composante dudit vecteur des signes chiffré, pour obtenir un vecteur de comparaison chiffré représentatif de la comparaison de chaque composante du vecteur de données chiffrées au seuil de décision correspondant.

6. Procédé selon l'une quelconque des revendications 1 à 5, dans lequel la détermination (58) du signe de chaque composante du vecteur d'évaluation déchiffré par le deuxième environnement d'exécution sécurisé (12) comporte en outre une multiplication de chaque composante de signe par un facteur constant choisi, de préférence égal à 0 ,5.

7. Procédé selon la revendication 6 comportant en outre, par le premier environnement d'exécution (10), un ajustement additif (64, 64') consistant à ajouter ledit facteur constant à chaque composante dudit vecteur des signes chiffré.

8. Procédé selon l'une quelconque des revendications 1 à 7, dans lequel la phase de parcours de l'au moins un arbre de décision est effectuée par le premier environnement d'exécution, et comporte un calcul (65-66) d'un vecteur de résultat par niveau de l'arbre de décision en fonction dudit au moins un vecteur des signes chiffré.

9. Procédé selon la revendication 8 comportant en outre un calcul (68) d'un vecteur de décision en fonction des vecteurs de résultat par niveau.

10. Procédé selon la revendication 9, dans lequel le calcul (68) d'un vecteur de décision comporte une multiplication chiffrée (75), des vecteurs de résultat par niveau.

11. Procédé selon la revendication 9, dans lequel le calcul (68) d'un vecteur de décision comporte une addition chiffrée (72) des vecteurs de résultat par niveau, pour obtenir un vecteur résultat somme chiffré.

12. Procédé selon la revendication 11, dans lequel le calcul (68) d'un vecteur de décision comporte en outre une étape d'amorçage (74) appliqué au vecteur résultat somme chiffré pour obtenir un vecteur de décision comportant un seul '1' indiquant un nœud terminal résultat et des '0' pour les autres nœuds terminaux de l'arbre de décision.

13. Procédé selon la revendication 11, dans lequel le calcul (68) d'un vecteur de décision comporte en outre une étape de soustraction (76) d'une valeur prédéterminée, égale au nombre de niveaux de profondeur de l'arbre de décision, de chaque composante du vecteur résultat somme chiffré, et une étape de masquage multiplicatif (78) du vecteur résultant de ladite étape de soustraction, permettant d'obtenir un vecteur de décision comportant un seul '0' indiquant un nœud terminal résultat et des valeurs aléatoires pour les autres nœuds terminaux de l'arbre de décision.

14. Programme d'ordinateur comportant des instructions logicielles qui, lorsqu'elles sont mises en œuvre par un dispositif électronique programmable, mettent en œuvre un procédé de traitement de données chiffrées conforme aux revendications 1 à 13.

15. Système de traitement de données chiffrées, comportant un client (4) et un serveur (6) fournissant un moins un arbre de décision (22), le serveur (6) étant configuré pour effectuer une évaluation d'un vecteur de données chiffrées d'un client (4) par l'au moins un arbre de décision (22), le vecteur de données chiffrées du client étant de dimension K inférieure ou égale au nombre de nœuds dudit au moins un arbre de décision,

l'évaluation du vecteur de données chiffrées par au moins un arbre de décision (22) comportant une phase de comparaison des composantes du vecteur de données chiffrées à des valeurs de seuils de décision (t0, t1, t2) associées aux nœuds (N0, N1, N2) dudit au moins un arbre de décision (22), et une phase de parcours de l'au moins un arbre de décision (22) en fonction du résultat de la phase de comparaison, pour obtenir un résultat de décision chiffré, le système comportant un premier environnement d'exécution (10) et un deuxième environnement d'exécution sécurisé (12),
le système étant **caractérise en ce que**, dans la phase de comparaison :

le premier environnement d'exécution (10), est configuré pour mettre en œuvre un schéma de chiffrement homomorphe, un module (30) de calcul d'un vecteur d'évaluation, comportant des composantes chiffrées représentatives chacune d'une différence entre une composante du vecteur de données chiffrées et une valeur de seuil de décision associée à un nœud correspondant dudit au moins un arbre de décision, et de fourniture du vecteur d'évaluation audit deuxième environnement d'exécution sécurisé (20), exécuté par ledit serveur (6) mais contrôlé par ledit client (4),
le deuxième environnement d'exécution sécurisé (20) étant configuré pour mettre en œuvre :

- un module (32) de déchiffrement, en appliquant une clé privée dudit client, préalablement enregistrée dans l'environnement d'exécution sécurisé (20), dudit vecteur d'évaluation,
- un module (34) de détermination du signe de chaque composante du vecteur d'évaluation déchiffré et fourniture (36) d'un vecteur des signes chiffré résultant de ladite détermination du signe audit premier environnement d'exécution.

*FIGURE.1*

FIGURE.2

*FIGURE.3*

FIGURE.4

*FIGURE.5*

*FIGURE.6*

| | Europäisches Patentamt / European Patent Office / Office européen des brevets | **RAPPORT DE RECHERCHE EUROPEENNE** | **Numéro de la demande** EP 25 22 4218 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2021/083841 A1 (TUENO ANSELME KEMGNE [CH] ET AL) 18 mars 2021 (2021-03-18) * figure 1 * * alinéa [0003] * * alinéa [0005] * * alinéa [0019] * * alinéa [0067] * * alinéa [0106] * ----- | 1-15 | INV. G06N5/01 H04L9/00 G06F21/62 |
| A | US 2024/273220 A1 (NAKAI TSUNATO [JP]) 15 août 2024 (2024-08-15) * figure 3 * * alinéa [0066] * * alinéa [0179] * * alinéa [0250] - alinéa [0252] * ----- | 1-15 | |
| | | | **DOMAINES TECHNIQUES RECHERCHES (IPC)** G06N H04L G06F |

Le présent rapport a été établi pour toutes les revendications

| Lieu de la recherche | Date d'achèvement de la recherche | Examinateur |
|---|---|---|
| Munich | 23 avril 2026 | Caragata, Daniel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 25 22 4218

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-04-2026

| Document brevet cité au rapport de recherche | Date de publication | Membre(s) de la famille de brevet(s) | Date de publication |
|---|---|---|---|
| US 2021083841 A1 | 18-03-2021 | US 2021083841 A1 | 18-03-2021 |
| | | US 2023379135 A1 | 23-11-2023 |
| US 2024273220 A1 | 15-08-2024 | CN 118382866 A | 23-07-2024 |
| | | DE 112021008542 T5 | 24-10-2024 |
| | | JP 7466800 B2 | 12-04-2024 |
| | | JP WO2023119421 A1 | 29-06-2023 |
| | | US 2024273220 A1 | 15-08-2024 |
| | | WO 2023119421 A1 | 29-06-2023 |

Pour tout renseignement concernant cette annexe : voir Journal Officiel de l'Office européen des brevets, No.12/82